# EUROPEAN PATENT SPECIFICATION

(11) **EP 2 608 581 B1**
(45) Date of publication and mention of the grant of the patent: **25.07.2018**
(21) Application number: 11861326.4
(22) Date of filing: 18.11.2011
(51) Int. Cl.: H04W 4/12

(54) **METHOD, SYSTEM AND APPARATUS FOR INDICATING TYPE OF MESSAGES**
VERFAHREN, SYSTEM UND VORRICHTUNG ZUR ANZEIGE VON MELDUNGSARTEN
PROCÉDÉ, SYSTÈME ET APPAREIL POUR INDIQUER LE TYPE DE MESSAGES

(30) Priority: 17.10.2011 CN 201110314769
(43) Date of publication of application: 26.06.2013
(73) Proprietor: ZTE Corporation, Shenzhen, Guangdong 518057 (CN)
(72) Inventor: XU, Hui, Nanshan District, Shenzhen City Guangdong Province 518057 (CN); WU, Chuanxi, Nanshan District, Shenzhen City Guangdong Province 518057 (CN); SUN, Qingbo, Nanshan District, Shenzhen City Guangdong Province 518057 (CN)
(74) Representative: Novagraaf Technologies
(86) International application number: PCT/CN2011/082474
(87) International publication number: WO 2013/056486

(56) References cited:
- EP-A1- 2 182 328
- WO-A1-2011/051753
- WO-A2-2009/045026
- WO-A2-2011/119680
- CN-A- 1 806 401
- CN-A- 101 112 030
- CN-A- 101 115 297
- CN-A- 101 931 898
- CN-A- 101 931 898
- CN-A- 102 195 959

## Description

### Technical Field

The present invention relates to the mobile communication technology, and in particular, to a method, system and apparatus for indicating a message type.

### Background of the Related Art

The machine to machine (M2M) refers to all technologies and means for establishing the connection between the machines. The M2M idea appears in the nineties last century, but it only remained at theory stage. After 2000, with the development of the mobile communication technology, it became possible to realize networking the machine devices by the mobile communication technology. The M2M service appeared in the market in about 2002 and developed rapidly in the subsequent several years, and becomes the focus of the numerous communication device traders and the telecommunication operators. Now, the global machine quantity is much more than the people quantity, so the good market prospect of the M2M technology can be predicted.

The research on the M2M communication application scene indicates that providing the M2M communication in the mobile network has the potential market prospects. But the M2M communication has put forward a lot of new requirements to the system, in order to strengthen the competitiveness of the mobile network in this respect, it is necessary to optimize the current mobile network to support the M2M communication more effectively.

The current mobile communication network is designed mainly aiming at the human to human communication, and the optimization on the communication of the machine to machine, the human to machine is insufficient. In addition, how can the operator provide the M2M communication service with the low cost is the key to success of the M2M communication deployment.

Because of the above-mentioned situations, it is necessary to research the solution for the mobile network to support the M2M communication, and the solution should reuse the current network to a high limit and reduce the influence to the network caused by a large number of the M2M communication and the complexity of the operation maintenance. The competition of the telecommunication market is becoming intense gradually at present, the expense is dropping constantly, the profit space of the operator is being reduced constantly, the communication market based on people is tending to the saturation, and the M2M communication is a brand-new development opportunity for the operator.

In order to utilize the mobile network resource efficiently, the 3rd Generation Partnership Project (3GPP) proposes the machine type communication (MTC), that is, the service of the M2M and the machine to man communication, of which the service scope has far gone beyond the communication between Human to Human (H2H) in the past, and the MTC has very great difference at the respects such as access control, charging, security, quality of service (QoS), the service mode, etc., with the current H2H communication mode.

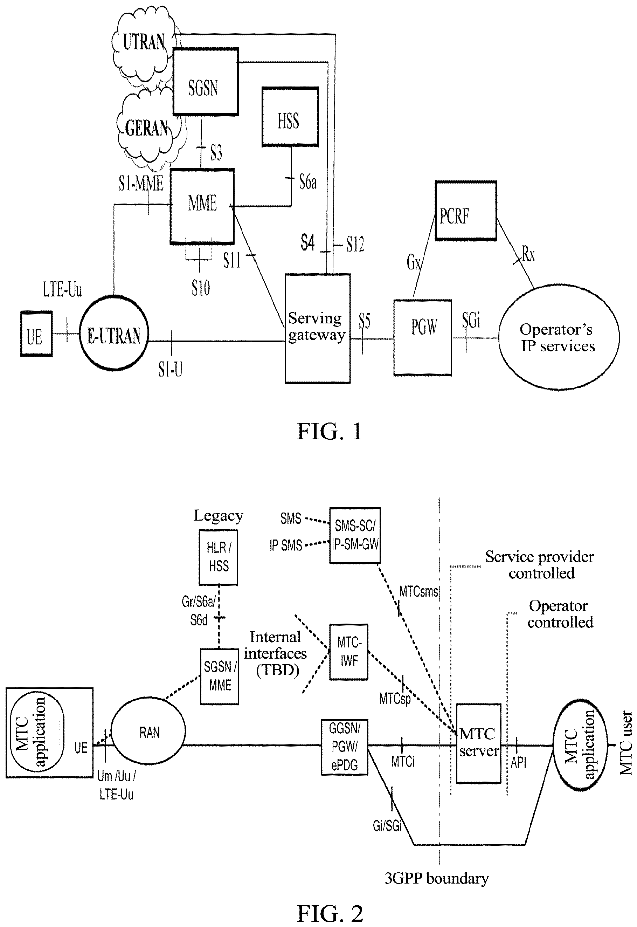

FIG. 1 is a framework diagram of a 3GPP Evolved Packet System (EPS) in the related art. As shown in FIG. 1, the EPS includes a wireless access network and a core network, the wireless access network can be a Universal Terrestrial Radio Access Network (UTRAN), an Evolved UTRAN (E-UTRAN), a GSM or EDGE radio access network (GERAN). In the Evolved Packet Core (EPC), the core network can be a network element, such as, a Mobility Management Entity (MME), a Serving Gateway (S-GW), a Packet Data Network Gateway (P-GW), etc.; in the GPRS core network, the core network can be a network element, such as, a Serving GPRS Support Node (SGSN), etc.; in the E-UTRAN, the core network can be an evolved Node B (eNB).

The Small Data is one of the Features of the MTC, the problem that this feature pays close attention to is that: as to some MTC devices, their transmitted data bulk are very small, but the whole signaling procedure is still required, and the transmitted data and the involved signaling are asymmetric, which causes the waste of the network resource; moreover, because the quantity of the MTC devices is often very large, the concentrated access must bring a large number of signaling, which is very easy to cause the network congestion, so, it needs to adopt more effective way to transmit the Small Data.

The mall Data includes the Mobile Originated (MO) service and the Mobile Terminating
(MT) service, that is, includes that the MTC device transmits the information or receives the information.

In order to realize the effective transmission of the Small Data, the scheme already put forward includes: transmitting the Small Data through the short message, or bearing the Small Data through the control plane signaling. FIG. 2 is the framework diagram of the MTC in the 3GPP in the related art. As shown in FIG. 2, as to the way of bearing the Small Data through the control plane signaling, the associated control plane signaling is transmitted to the network node, the network node retrieves the Small Data in the control plane signaling, and then transmits to the corresponding user equipment or other network nodes or the MTC server.

It is found that there are the following problems in the effective transmission of the Small Data during the research and practice of the related art: if the control plane signaling received by the network node which is responsible for processing the control plane signaling contains the user plane data, the network node may be unable to distinguish the conventional control plane signaling and the control plane signaling containing the user plane data, thus the control plane signaling containing the user plane data is processed incorrectly, which causes the loss of the user plane data.

An example of prior art method is described in WO 2011/119680A2 (INTERDIGITAL PATENT HOLDINGS [US]; AGHILI BEHROUZ[US]; MURRAY JOSEPH) 29 September 2011 (2011-09-29), and relevant technologies are also known from WO 2009/045026 A2 (LG ELECTRONICS INC [KR]; IHM BIN CHUL [KR]; CHUN JIN YOUNG [KR]; KO HY) 9 April 2009 (2009-04-09), EP 2182328 A1 (KONINKL KPN NV [NL]; TNO [NL] 5 May 2010 (2010-05-05), WO 2011/051753 A1 (HUAWEI TECH CO LTD [CN]; ERIAU LAURENCE [FR]) 5 May 2011 (2011-05-05) and CN 101931 898 A1 (HUAWEI TECH CO LTD) 29 December 2010 (2010-12-29).

### Summary of the Invention

On that basis, the main objective of the present invention is to provide a method, system and apparatus for indicating a message type, so as to solve the problem that the user plane data
are lost when the control plane signaling contains the user plane data as defined in the attached independent claims.

In order to achieve the above-mentioned objective, a method for indicating a message type is provided, comprising: setting a message type identification in a transmitted control plane signaling; and further comprising:
a network node which receives the control plane signaling, according to the message type identification, identifying whether user plane data are contained in the control plane signaling, and transmitting the user plane data to a user equipment or other network nodes or a machine type communication server (MTC Server) through the control plane signaling when confirming that the control plane signaling contains the user plane data; and
the user equipment or the MTC Server identifying whether the control plane signaling contains the user plane data, and retrieving the user plane data therefrom when the control plane signaling contains the user plane data.

In the above-mentioned method, the method further comprises:
when confirming that the control plane signaling does not contain the user plane data, the network node forwarding the control plane signaling not containing the user plane data to a corresponding user equipment, or other network nodes or the MTC Server.

In the above-mentioned method, the setting a message type identification in a transmitted control plane signaling is that:
the user equipment and/or the network node and/or the MTC Server adds a message type identification in a transmitted control plane signaling; wherein, the control plane signaling is a control plane signaling containing the user plane data, or a conventional control plane signaling.

In the above-mentioned method, the user equipment is a UE, a mobile equipment (ME), or a mobile station (MS); and
the network node is an evolved node B (eNB), a mobility management entity (MME), a serving GPRS support node (SGSN), a packet data network gateway (P-GW), a Gateway GPRS
Support Node (GGSN), or an MTC interworking function (MTC-IWF).

In the above-mentioned method, the control plane signaling is a non access stratum signaling sent to the MME or the SGSN by the user equipment, or a NAS signaling sent to the user equipment by the MME or the SGSN, or the control plane signaling sent to the MME or the SGSN by the P-GW or the GGSN or the MTC-IWF, etc., or the control plane signaling sent to the MME or the SGSN or the MTC Server by the MTC-IWF, or the control plane signaling sent to the MME or the SGSN or the MTC Server by the P-GW or the GGSN, or the control plane signaling sent to the MTC-IWF or the P-GW or the GGSN by the MTC Server.

In the above-mentioned method, the message type identification is a message type indication bit.

In the above-mentioned method, the network node which receives the control plane signaling identifying whether user plane data are contained in the control plane signaling according to the message type identification is:
when the message type indication bit is 1, it is indicated that the control plane signaling contains the user plane data; when being 0, it is indicated that the control plane signaling does not contain the user plane data;
or, when the message type indication bit is 0, it is indicated that the control plane signaling containing the user plane data; when being 1, it is indicated that the control plane signaling does not contain the user plane data;
or, when the message type identification exists in the transmitted control plane signaling, it is indicated that the control plane signaling contains the user plane data; when the message type identification does not exist in the transmitted control plane signaling, it is indicated that the control plane signaling does not contain the user plane data.

In the above-mentioned method, the transmitting the user plane data to the user equipment or other network nodes or the MTC Server through the control plane signaling is:
the network node retrieving the user plane data from the control plane signaling containing the user plane data, and encapsulating the user plane data and the message type identification in the control plane signaling, and transmitting the control plane signaling to the user equipment, or other network nodes, or the MTC Server.

In the above-mentioned method, the MTC Server identifying whether the control plane signaling contains the user plane data, and retrieving the user plane data therefrom when the control plane signaling contains the user plane data is:
when the control plane signaling is an MO signaling, the user equipment or the network node forwarding the control plane signaling containing the user plane data to the corresponding network node, the corresponding network node forwarding the received control plane signaling to the MTC Server, and the MTC Server, according to the message type identification therein, identifying whether the control plane signaling contains the user plane data, when the control plane signaling contains the user plane data, analyzing the user plane data from the received control plane signaling.

In the above-mentioned method, the user equipment identifying whether the control plane signaling contains the user plane data, and retrieving the user plane data therefrom when the control plane signaling contains the user plane data is:
when the control plane signaling is an MT signaling, the MTC server or the network node forwarding the control plane signaling containing the user plane data to other network nodes, other network nodes forwarding control plane data to the user equipment, and the user equipment, according to the message type identification therein, identifying whether the control plane signaling contains the user plane data, when the control plane signaling contains the user plane data, retrieving the user plane data from the control plane signaling.

Further provided is a system for indicating a message type, comprising: a user equipment, a network node and a machine type communication server (MTC server); wherein,
the user equipment and/or the network node and/or the MTC server is configured to set a message type identification in a transmitted control plane signaling;
the network node is further configured to, according to the message type identification, identify whether user plane data are contained in the control plane signaling, and transmit the user plane data to the user equipment or other network nodes or the MTC Server through the control plane signaling when confirming that the control plane signaling contains the user plane data; and
the user equipment or the MTC Server is further configured to identify whether the control plane signaling contains the user plane data, and retrieves the user plane data therefrom when the control plane signaling contains the user plane data.

In the above-mentioned system, the network node is further configured to forward the control plane signaling not containing the user plane data to a corresponding user equipment or other network nodes or the MTC Server when confirming that the control plane signaling does not contain the user plane data.

Further provided is a user equipment, configured to set a message type identification in a transmitted control plane signaling, and further configured to receive the control plane signaling transmitted by a network node, identify whether the control plane signaling contains the user plane data, and retrieves the user plane data therefrom when the control plane signaling contains the user plane data.

Further provided is a network node, configured to set a message type identification in a transmitted control plane signaling, and further configured to according to the message type identification, identify whether user plane data are contained in the control plane signaling, and transmit the user plane data to the user equipment or other network nodes or the MTC Server through the control plane signaling when confirming that the control plane signaling contains the user plane data.

The network node is further configured to forward the control plane signaling not containing the user plane data to a corresponding user equipment or other network nodes or an MTC Server when confirming that the control plane signaling does not contain the user plane data.

Further provided is a machine type communication server (MTC server), configured to set a message type identification in a transmitted control plane signaling; and
further configured to receive the control plane signaling transmitted by a network node, identify whether the control plane signaling contains user plane data, and retrieves the user plane data therefrom when the control plane signaling contains the user plane data.

By the method, system and apparatus for indicating a message type provided in the present invention, a message type identification is set in a transmitted control plane signaling, it is identified whether user plane data are contained in the control plane signaling, and the network node receiving the control plane signaling transmits the user plane data to a user equipment or other network nodes or the MTC Server through the control plane signaling when confirming that the control plane signaling contains the user plane data according to the message type identification; and the user equipment or the MTC Server identifies whether the control plane signaling contains the user plane data, and retrieves the user plane data therefrom when the control plane signaling contains the user plane data, which is used to solve the problem that the correct transmission of the user plane data borne through the control plane signaling.

### Brief Description of Drawings

FIG. 1 is a framework diagram of a 3GPP EPS in the related art.
FIG. 2 is a framework diagram of an MTC in the 3GPP in the related art.
FIG. 3 is a flow chart of a method of realizing indicating a message type of the present invention.
FIG. 4 is a flow chart of embodiment one of a method of realizing indicating a message type of the present invention.
FIG. 5 is a flow chart of embodiment two of a method of realizing indicating a message type of the present invention.
FIG. 6 is a structure diagram of a system of realizing indicating a message type of the present invention.

### Preferred Embodiments of the Present Invention

The basic idea of the present invention is: setting a message type identification in a transmitted control plane signaling; a network node which receives the control plane signaling, according to the message type identification, identifying whether user plane data are contained in the control plane signaling, and transmitting the user plane data to a user equipment or other network nodes or a machine type communication server (MTC Server) through the control plane signaling when confirming that the control plane signaling contains the user plane data; and the user equipment or the MTC Server identifying whether the control plane signaling contains the user plane data, and retrieving the user plane data therefrom when the control plane signaling contains the user plane data.

The present invention is described in detail with reference to the accompanying drawings and in combination with embodiments hereinafter.

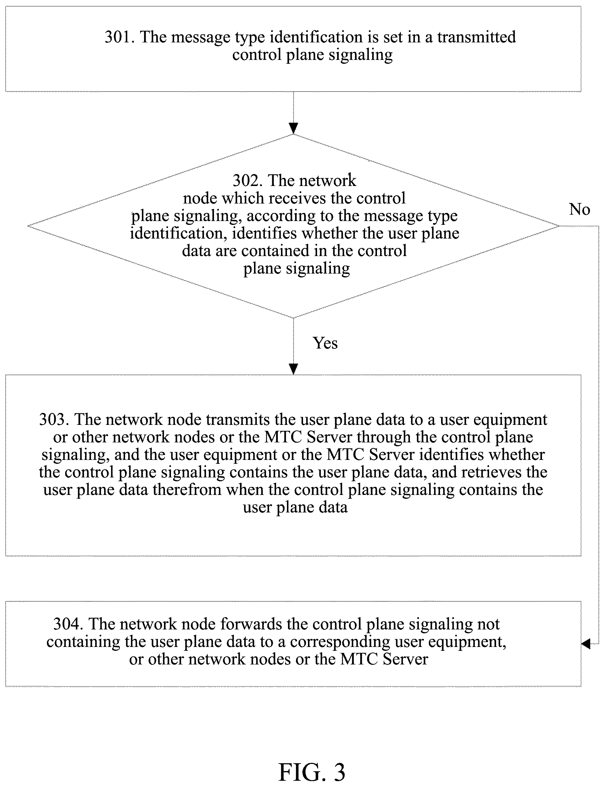

The present invention provides a method for indicating a message type, and FIG. 3 is a flow chart of the method of realizing indicating a message type of the present invention. As shown in FIG. 3, the method includes the following steps.

In step 301, a message type identification is set in a transmitted control plane signaling.

Specifically, the user equipment and/or the network node and/or the MTC Server adds a message type identification in a transmitted control plane signaling.

The control plane signaling is a control plane signaling containing the user plane data, or a conventional control plane signaling; and the user plane data are the Small Data in the MTC characteristics.

The user equipment can be a UE, a mobile equipment (ME), and a mobile station (MS); and the user equipment is also configured with the function supporting the MTC characteristics; the network node can be an evolved node B (eNB), a mobility management entity (MME), a serving GPRS support node (SGSN), a packet data network gateway (P-GW), a Gateway GPRS Support Node (GGSN), or an MTC interworking function (MTC-IWF).

The control plane signaling is a non access stratum signaling sent to the MME or the SGSN by the user equipment, or a NAS signaling sent to the user equipment by the MME or the SGSN, or the control plane signaling sent to the MME or the SGSN by the P-GW or the GGSN or the MTC-IWF, etc., or the control plane signaling sent to the MME or the SGSN or the MTC Server by the MTC-IWF, or the control plane signaling sent to the MME or the SGSN or the MTC Server by the P-GW or the GGSN, or the control plane signaling sent to the MTC-IWF or the P-GW or the GGSN by the MTC Server; wherein, the MME or SGSN sends the NAS signaling to the UE through the eNB.

In the present invention, the message type identification added in the transmitted control plane signaling can be a message type indication bit; when the message type indication bit is 1, it is indicated that the control plane signaling contains the user plane data; when the message type indication bit is 0, it is indicated that the control plane signaling does not contain the user plane data; or, when the message type indication bit is 0, it is indicated that the control plane signaling contains the user plane data; when the message type indication bit is 1, it is indicated that the control plane signaling does not contain the user plane data; or, the message type identification is only added in the control plane signaling containing the user plane data, that is, when the message type identification exists in the transmitted control plane signaling, it is indicated that the control plane signaling contains the user plane data; when the message type identification does not exist in the transmitted control plane signaling, it is indicated that the control plane signaling does not contain the user plane data.

In step 302, the network node which receives the control plane signaling, according to the message type identification, identifies whether the user plane data are contained in the control plane signaling, and if yes, then step 303 is executed; or else, step 304 is executed.

In step 303, the network node transmits the user plane data to a user equipment or other network nodes or the MTC Server through the control plane signaling; and the user equipment or the MTC Server identifies whether the control plane signaling contains the user plane data, and retrieves the user plane data therefrom when the control plane signaling contains the user plane data.

Specifically, the network node retrieves the user plane data from the control plane signaling containing the user plane data, and encapsulates the user plane data and the message type identification in the control plane signaling, and transmits the control plane signaling to the user equipment, or other network nodes, or the MTC Server.
if the network node is a network node close to the user equipment or the MTC Server, then the user plane data do not need to be forwarded through other network nodes; if the network node is not a network node close to the user equipment or the MTC Server, the user plane data need to be further forwarded through other network nodes, and the operation of the other network nodes receiving the control plane signaling is the same as the operation in step 302 and step 303.

Finally, the control plane signaling will reach the user equipment or the MTC Server, and after the user equipment or the MTC Server receives the control plane signaling, according to the message type identification therein, the user equipment or the MTC Server identifies whether the control plane signaling contains the user plane data, and when the control plane signaling contains the user plane data, the user equipment or the MTC Server analyzes the control plane signaling, and obtains the user plane data.

Here, if the control plane signaling is an MO signaling, the user equipment or the network node MME or SGSN may not retrieve the user plane data from the control plane signaling containing the user plane data but forward the control plane signaling containing the user plane data to the corresponding network node, such as, the P-GW or GGSN or MTC IWF etc., and the P-GW or GGSN or MTC IWF forwards the received control plane signaling to the MTC Server, and the MTC Server identifies whether the control plane signaling contains the user plane data, and when the control plane signaling contains the user plane data, retrieves the user plane data from the received control plane signaling.

If the control plane signaling is an MT signaling, the MTC server or the network node MTC-IWF or P-GW or GGSN may not retrieve the user plane data from the control plane signaling containing the user plane data but forward the control plane signaling containing the user plane data to other network nodes, MME or SGSN, the MME or SGSN forwards the control plane data to the user equipment, and the user equipment identifies whether the control plane signaling contains the user plane data, and when the control plane signaling contains the user plane data, retrieves the user plane data from the control plane signaling.

In step 304, the network node forwards the control plane signaling not containing the user plane data to a corresponding user equipment, or other network nodes or the MTC Server.

### Embodiment one

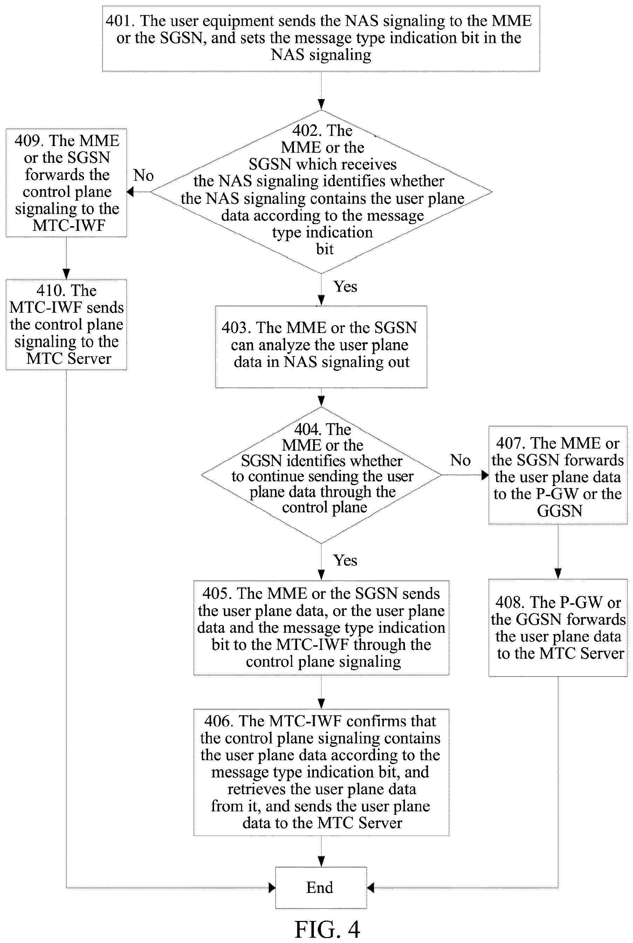

FIG. 4 is a flow chart of embodiment one of a method of realizing indicating a message type of the present invention, and this flow is for the scenario of the user equipment initiating an MO signaling. As shown in FIG. 4, the method includes the following steps.

In step 401, the user equipment sends the NAS signaling to the MME or the SGSN, and sets the message type indication bit in the NAS signaling.

Specifically, the user equipment sends the NAS signaling to the MME or the SGSN, and adds a message type indication bit in the NAS signaling; the NAS signaling can be a NAS signaling sent by the user equipment in any of the following signaling processes: Attach Request, Service Request, TAU/RAU Request, etc.; the NAS signaling includes the user plane data, Small Data; the size of the Small Data is generally given by the user signing data or the Operation and Maintenance entity (O&M) of the operator or the MTC Server.

The message type indication bit is one bit, when the bit is 1 or 0 or exists, it is indicated that the control plane signaling contains the user plane data, and when the bit is 0 or 1 or does not exist, it is indicated that the control plane signaling does not contain the user plane data. It can be identified whether the control plane signaling contains the user plane data according to the value of the bit or whether the bit exists.

In step 402, the MME or the SGSN which receives the NAS signaling identifies whether the NAS signaling contains the user plane data according to the message type indication bit; if yes, then step 403 is executed, otherwise, step 409 is executed.

Here, the MME or the SGSN, after receiving the NAS signaling, checks the message type indication bits at first, and identifies whether the NAS signaling contains the user plane data.

In step 403, the MME or the SGSN analyzes the user plane data in NAS signaling out.

Specifically, the MME or the SGSN analyzes the user plane data in the NAS signaling out according to the protocol.

In step 404, the MME or the SGSN identifies whether to continue sending the user plane data through the control plane, if yes, step 405 is executed, otherwise, step 407 is executed.

Specifically, the MME or SGSN identifies by itself or identifies according to the instructions of the O&M whether to continue sending the user plane data through the control plane or the user plane, if yes, step 405 is executed, otherwise, step 407 is executed.

In step 405, the MME or the SGSN sends the user plane data, or the user plane data and the message type indication bit to the MTC-IWF through the control plane signaling.

Specifically, the MME or the SGSN encapsulates the user plane data, or the user plane data and the message type indication bit in the control plane signaling, and sends this control plane signaling to the MTC-IWF; the control plane signaling is a control plane signaling between the MME or the SGSN and the MTC-IWF.

In step 406, the MTC-IWF confirms that the control plane signaling contains the user plane data according to the message type indication bit, and retrieves the user plane data from it, and sends the user plane data to the MTC Server, and the flow ends.

Specifically, the MTC-IWF is a control plane network node, the MTC-IWF confirms that the control plane signaling contains the user plane data according to the message type indication bit, and retrieves the user plane data from it, encapsulates again the user plane data or the user plane data and the message type indication bit in the control plane signaling and sends to the MTC Server, the control plane signaling is the control plane signaling between the MTC-IWF and the MTC Server; and the MTC Server retrieves the user plane data from the received control plane signaling.

In step 407, the MME or the SGSN forwards the user plane data to the P-GW or the GGSN.

Specifically, the MME forwards the user plane data to the P-GW, or the SGSN forwards the user plane data to the P-GW or the GGSN; generally there is no direct interface between the MME or the SGSN and the P-GW, the MME or the SGSN can forward the user plane data to the P-GW through the S-GW, or the SGSN forwards the user plane data to the GGSN directly.

In step 408, the P-GW or the GGSN forwards the user plane data to the MTC Server, and the flow ends.

In step 409, the MME or the SGSN forwards the control plane signaling to the MTC-IWF.

Specifically, there is no user plane data in the control plane signaling, the MME or the SGSN finds the corresponding MTC-IWF through the indication of the control plane signaling or through querying the registration information in the Home Subscriber Server (HSS) or the Home Location Register (HLR), and forwards the control plane signaling to the MTC-IWF.

In step 410, the MTC-IWF sends the control plane signaling to the MTC Server, and the flow ends.

Here, the MTC-IWF finds corresponding MTC Server through the control plane signaling indication or through the registration information in the HSS or the HLR, and forwards the control plane signaling to the MTC Server.

### Embodiment 2

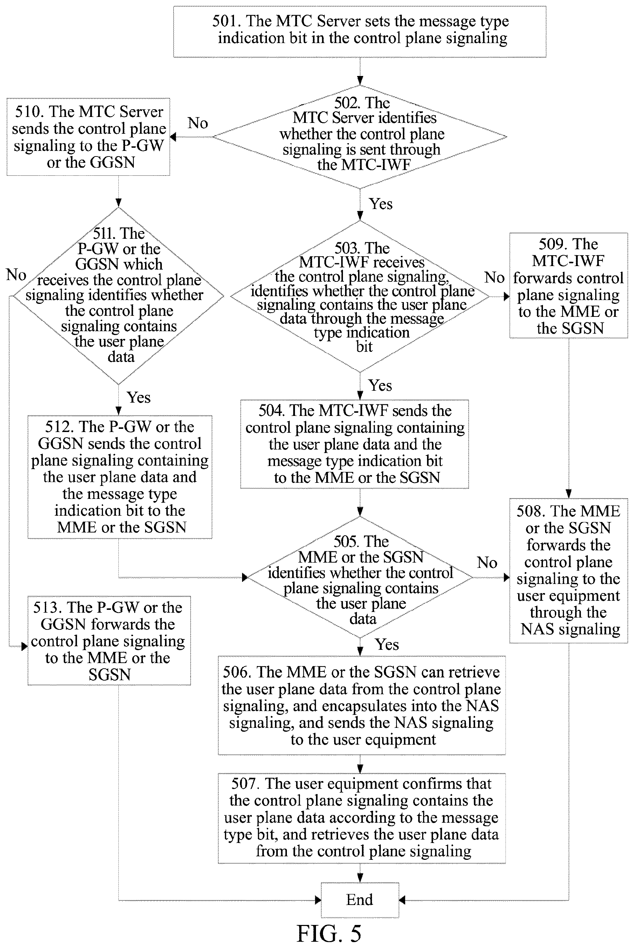

FIG. 5 is a flow chart of embodiment two of a method of realizing indicating a message type of the present invention, and this flow is for the scenario of the network side initiating an MT signaling. As shown in FIG. 5, the method includes the following steps.

In step 501, the MTC Server sets the message type indication bit in the control plane signaling; wherein, the control plane signaling refers to the signaling between the MTC Server and the P-GW, the GGSN or the MTC-IWF.

In step 502, the MTC Server identifies whether the control plane signaling is sent through the MTC-IWF, if yes, step 503 is executed, and otherwise, step 510 is executed.

Specifically, the MTC Server can identify by itself or identify according to the instructions of the O&M whether the control plane signaling is sent through the MTC-IWF; if yes, step 503 is executed, otherwise, step 510 is executed.

In step 503, the MTC-IWF receives the control plane signaling, identifies whether the control plane signaling contains the user plane data through the message type indication bit, if yes, step 504 is executed; otherwise, step 509 is executed.

In step 504, the MTC-IWF sends the control plane signaling containing the user plane data and the message type indication bit to the MME or the SGSN.

Specifically, the MTC-IWF retrieves the user plane data, and then encapsulates the user plane data and the message type indication bit into the new control plane signaling; the control plane signaling refers to the control plane signaling between the MTC-IWF and the MME or the SGSN; the MTC-IWF queries the corresponding MME or SGSN according to the instruction of control plane signaling or the signing data in the HSS or the HLR, and sends the control plane signaling to the MME or the SGSN.

In step 505, the MME or the SGSN identifies whether the control plane signaling contains the user plane data, and if yes, step 506 is turned to, otherwise step 508 is turned to.

In step 506, the MME or the SGSN retrieves the user plane data from the control plane signaling, and encapsulates into the NAS signaling, and after adding the message class bit in the NAS signaling, sends the NAS signaling to the user equipment.

In step 507, the user equipment confirms that the control plane signaling contains the user plane data according to the message type bit, the user equipment retrieves the user plane data from the control plane signaling, and the flow ends; wherein, the user equipment retrieves the user plane data from the control plane signaling according to the stipulation of the protocol.

In step 508, the MME or the SGSN forwards the control plane signaling to the user equipment through the NAS signaling, and flow ends.

In step 509, the MTC-IWF forwards control plane signaling to the MME or the SGSN, and step 508 is executed.

In step 510, the MTC Server sends the control plane signaling to the P-GW or the GGSN; wherein, the control plane signaling is the control plane signaling in which the message type indication bit is added.

In step 511, the P-GW or the GGSN which receives the control plane signaling identifies whether the control plane signaling contains the user plane data through the message type bit, if yes, step 512 is executed, and otherwise, step 513 is executed.

In step 512, the P-GW or the GGSN sends the control plane signaling containing the user plane data and the message type indication bit to the MME or the SGSN, and step 505 is executed; here, generally there is no direct interface between the P-GW and the MME or the SGSN, the P-GW can forward the signaling to the MME or the SGSN through the S-GW, or the GGSN forwards the signaling to the SGSN directly.

In step 513, the P-GW or the GGSN forwards the control plane signaling to the MME or the SGSN, and step 508 is executed.

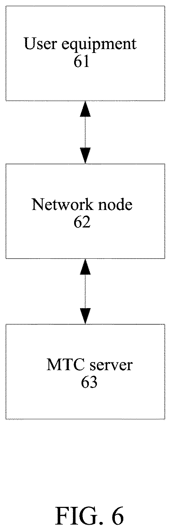

In order to realize the above-mentioned method, the present invention further provides a system for indicating a message type, and FIG. 6 is a structure diagram of a system of realizing indicating a message type of the present invention. As shown in FIG. 6, the system includes a user equipment 61, a network node 62 and a machine type communication server (MTC server) 63; wherein,
the user equipment 61 and/or the network node 62 and/or the MTC server 63 is configured to set a message type identification in a transmitted control plane signaling;
the network node 62 is further configured to, according to the message type identification, identify whether user plane data are contained in the control plane signaling, and transmit the user plane data to the user equipment 61 or other network nodes 62 or the MTC Server 63 through the control plane signaling when confirming that the control plane signaling contains the user plane data; and
the user equipment 61 or the MTC Server 63 is further configured to identify whether the control plane signaling contains the user plane data, and retrieves the user plane data therefrom when the control plane signaling contains the user plane data.

The network node 62 is further configured to forward the control plane signaling not containing the user plane data to a corresponding user equipment 61 or other network nodes or the MTC Server 63 when confirming that the control plane signaling does not contain the user plane data.

The control plane signaling is a control plane signaling containing the user plane data, or a conventional control plane signaling.

The user equipment is a UE, a mobile equipment (ME), or a mobile station (MS); and the network node is an evolved node B (eNB), a mobility management entity (MME), a serving GPRS support node (SGSN), a packet data network gateway (P-GW), a Gateway GPRS Support Node (GGSN), or an MTC interworking function (MTC-IWF).

The control plane signaling is a non access stratum signaling sent to the MME or the SGSN by the user equipment, or a NAS signaling sent to the user equipment by the MME or the SGSN, or the control plane signaling sent to the MME or the SGSN by the P-GW or the GGSN or the MTC-IWF, etc., or the control plane signaling sent to the MME or the SGSN or the MTC Server by the MTC-IWF, or the control plane signaling sent to the MME or the SGSN or the MTC Server by the P-GW or the GGSN, or the control plane signaling sent to the MTC-IWF or the P-GW or the GGSN by the MTC Server.

The message type identification is a message type indication bit.

The network node 62 which receives the control plane signaling identifying whether user plane data are contained in the control plane signaling according to the message type identification is: when the message type indication bit is 1, it is indicated that the control plane signaling contains the user plane data; when being 0, it is indicated that the control plane signaling does not contain the user plane data; or, when the message type indication bit is 0, it is indicated that the control plane signaling contains the user plane data; when being 1, it is indicated that the control plane signaling does not contain the user plane data; or, when the message type identification exists in the transmitted control plane signaling, it is indicated that the control plane signaling contains the user plane data; when the message type identification does not exist in the transmitted control plane signaling, it is indicated that the control plane signaling does not contain the user plane data.

The network node 62 transmitting the user plane data to the user equipment 61 or other network nodes or the MTC Server 63 through the control plane signaling is: the network node retrieving the user plane data from the control plane signaling containing the user plane data, and encapsulating the user plane data and the message type identification in the control plane signaling, and transmitting the control plane signaling to the user equipment, or other network nodes, or the MTC Server.

The MTC Server 63 identifying whether the control plane signaling contains the user plane data, and retrieving the user plane data therefrom when the control plane signaling contains the user plane data is: when the control plane signaling is an MO signaling, the user equipment or the network node forwarding the control plane signaling containing the user plane data to the corresponding network node, the corresponding network node forwarding the received control plane signaling to the MTC Server, and the MTC Server, according to the message type identification therein, identifying whether the control plane signaling contains the user plane data, when the control plane signaling contains the user plane data, analyzing the user plane data from the received control plane signaling.

The user equipment 61 identifying whether the control plane signaling contains the user plane data, and retrieving the user plane data therefrom when the control plane signaling contains the user plane data is: when the control plane signaling is an MT signaling, the MTC server or the network node forwarding the control plane signaling containing the user plane data to other network nodes, other network nodes forwarding control plane data to the user equipment, and the user equipment, according to the message type identification therein, identifying whether the control plane signaling contains the user plane data, when the control plane signaling contains the user plane data, analyzing the user plane data from the received control plane signaling.

The above description is only the embodiments of the present invention, which is defined by the independent claims and their dependent claims, and is not intended to limit the protective scope of the present invention. Any modifications, equivalents and/or variations without departing the present invention should be embodied in the scope of the appending claims of the present invention.

## Claims

1. A method for indicating a message type, comprising:
setting a message type identification in a transmitted control plane signaling (301), wherein the message type identification is a message type indication bit; a network node which receives the control plane signaling, identifying whether user plane data are contained in the control plane signaling according to the message type identification (302), and transmitting the user plane data to a user equipment or other network nodes or a machine type communication server (MTC Server) through the control plane signaling when confirming that the control plane signaling contains the user plane data (303);
the user equipment or the MTC Server identifying whether the control plane signaling contains the user plane data, and retrieving the user plane data when the control plane signaling contains the user plane data;
**characterized in that**, when the message type identifier exists in the transmitted control plane signaling, it is indicated that the control plane signaling contains the user plane data; when the message type identifier does not exist in the transmitted control plane signaling, it is indicated that the control plane signaling does not contain the user plane data;
the MTC Server identifying whether the control plane signaling contains the user plane data, and retrieving the user plane data when the control plane signaling contains the user plane data is:
when the control plane signaling is a Mobile Originated, MO, signaling, the user equipment or the network node forwarding the control plane signaling containing the user plane data to a corresponding network node, the corresponding network node forwarding the received control plane signaling to the MTC Server, and the MTC Server, according to the message type identification in the control plane signaling, identifying whether the control plane signaling contains the user plane data, when the control plane signaling contains the user plane data, retrieving the user plane data from the received control plane signaling;
when the control plane signaling is a Mobile Terminating, MT, signaling, the MTC server or the network node forwarding the control plane signaling containing the user plane data to other network nodes, other network nodes forwarding control plane data to the user equipment, and the user equipment, according to the message type identification therein, identifying whether the control plane signaling contains the user plane data, when the control plane signaling contains the user plane data, retrieving the user plane data from the control plane signaling.

2. The method according to claim 1, further comprising:
when confirming that the control plane signaling does not contain the user plane data, the network node forwarding the control plane signaling not containing the user plane data to a corresponding user equipment, or other network nodes or the MTC Server (304).

3. The method according to claim 1, wherein, the setting a message type identification in a transmitted control plane signaling is that:
the user equipment and/or the network node and/or the MTC Server adds a message type identification in a transmitted control plane signaling; wherein, the control plane signaling is a control plane signaling containing the user plane data, or a conventional control plane signaling.

4. The method according to any one of claims 1-3, wherein,
the user equipment is a UE, a mobile equipment (ME), or a mobile station (MS);
the network node is an evolved node B (eNB), a mobility management entity (MME), a serving GPRS support node (SGSN), a packet data network gateway (P-GW), a Gateway GPRS Support Node (GGSN), or an MTC interworking function (MTC-IWF).

5. The method according to any one of claims 1-3, wherein, the control plane signaling is a non access stratum signaling sent to the MME or the SGSN by the user equipment, or a NAS signaling sent to the user equipment by the MME or the SGSN, or the control plane signaling sent to the MME or the SGSN by the P-GW or the GGSN or the MTC-IWF, etc., or the control plane signaling sent to the MME or the SGSN or the MTC Server by the MTC-IWF, or the control plane signaling sent to the MME or the SGSN or the MTC Server by the P-GW or the GGSN, or the control plane signaling sent to the MTC-IWF or the P-GW or the GGSN by the MTC Server.

6. The method according to claim 1, wherein, the transmitting the user plane data to the user equipment or other network nodes or the MTC Server through the control plane signaling is:
the network node retrieving the user plane data from the control plane signaling containing the user plane data, and encapsulating the user plane data and the message type identification in the control plane signaling, and transmitting the control plane signaling to the user equipment, or other network nodes, or the MTC Server.

7. A system for indicating a message type, comprising:
a user equipment (61) and/or a network node (62) and/or a machine type communication, MTC server(63), is configured to set a message type identification in a transmitted control plane signaling, wherein the message type identification is a message type indication bit; the network node is further configured to identify whether user plane data are contained in the control plane signaling according to the message type identification, and transmit the user plane data to the user equipment or other network nodes or the MTC Server through the control plane signaling when confirming that the control plane signaling contains the user plane data; and
the user equipment or the MTC Server is further configured to identify whether the control plane signaling contains the user plane data, and retrieve the user plane data when the control plane signaling contains the user plane data;;
wherein when the message type identifier exists in the transmitted control plane signaling, it is indicated that the control plane signaling contains the user plane data; when the message type identifier does not exist in the transmitted control plane signaling, it is indicated that the control plane signaling does not contain the user plane data;
**characterized in that** the user equipment or the MTC Server is further configured to identify whether the control plane signaling contains the user plane data, and retrieve the user plane data when the control plane signaling contains the user plane data in following way:
when the control plane signaling is a Mobile Originated, MO, signaling, the user equipment or the network node forwarding the control plane signaling containing the user plane data to a corresponding network node, the corresponding network node forwarding the received control plane signaling to the MTC Server, and the MTC Server, according to the message type identification in the control plane signaling, identifying whether the control plane signaling contains the user plane data, when the control plane signaling contains the user plane data, retrieving the user plane data from the received control plane signaling;
when the control plane signaling is a Mobile Terminating, MT, signaling, the MTC server or the network node forwarding the control plane signaling containing the user plane data to other network nodes, other network nodes forwarding control plane data to the user equipment, and the user equipment, according to the message type identification therein, identifying whether the control plane signaling contains the user plane data, when the control plane signaling contains the user plane data, retrieving the user plane data from the control plane signaling.
wherein, preferably, the network node is further configured to forward the control plane signaling not containing the user plane data to a corresponding user equipment or other network nodes or the MTC Server when confirming that the control plane signaling does not contain the user plane data.

8. A user equipment, configured to set a message type identification in a transmitted control plane signaling, wherein the message type identification is a message type indication bit, and receive the control plane signaling transmitted by a network node, identify whether the control plane signaling contains user plane data, and retrieve the user plane data when the control plane signaling contains the user plane data; **characterized in that**, when the message type identifier exists in the transmitted control plane signaling, it is indicated that the control plane signaling contains the user plane data; when the message type identifier does not exist in the transmitted control plane signaling, it is indicated that the control plane signaling does not contain the user plane data;
when the control plane signaling is a Mobile Originated, MO, signaling, the user equipment is further configured to forward the control plane signaling containing the user plane data to a corresponding network node, the corresponding network node is configured to forward the received control plane signaling to a MTC Server, and the MTC Server is configured to, according to the message type identification in the control plane signaling, identify whether the control plane signaling contains the user plane data, when the control plane signaling contains the user plane data, retrieve the user plane data from the received control plane signaling;
when the control plane signaling is a Mobile Terminating, MT, signaling, the MTC server or the network node is configured to forward the control plane signaling containing the user plane data to other network nodes, other network nodes forwards control plane data to the user equipment, and the user equipment is further configured to, according to the message type identification therein, identify whether the control plane signaling contains the user plane data, when the control plane signaling contains the user plane data, retrieve the user plane data from the control plane signaling.

9. A network node, configured to set a message type identification in a transmitted control plane signaling, wherein the message type identification is a message type indication bit, identify whether user plane data are contained in the control plane signaling according to the message type identification, and transmit the user plane data to the user equipment or other network nodes or the MTC Server through the control plane signaling when confirming that the control plane signaling contains the user plane data; wherein when the message type identifier exists in the transmitted control plane signaling, it is indicated that the control plane signaling contains the user plane data; when the message type identifier does not exist in the transmitted control plane signaling, it is indicated that the control plane signaling does not contain the user plane data;
**characterized in that** when the control plane signaling is a Mobile Originated, MO, signaling, the network node is further configured to forward the control plane signaling containing the user plane data to a corresponding network node, the corresponding network node forwards the received control plane signaling to the MTC Server, and the MTC Server is configured to, according to the message type identification in the control plane signaling, identify whether the control plane signaling contains the user plane data, when the control plane signaling contains the user plane data, retrieve the user plane data from the received control plane signaling;
when the control plane signaling is a Mobile Terminating, MT, signaling, the network node is further configured to forward the control plane signaling containing the user plane data to other network nodes, other network nodes forward control plane data to the user equipment, and the user equipment is configured to, according to the message type identification therein, identify whether the control plane signaling contains the user plane data, when the control plane signaling contains the user plane data, retrieve the user plane data from the control plane signaling.

10. The network node according to claim 9, further configured to forward the control plane signaling not containing the user plane data to a corresponding user equipment or other network nodes or an MTC Server when confirming that the control plane signaling does not contain the user plane data.

11. A machine type communication server (MTC server), configured to set a message type identification in a transmitted control plane signaling, wherein the message type identification is a message type indication bit, receive the control plane signaling transmitted by a network node, identify whether the control plane signaling contains user plane data, and retrieve the user plane data therefrom when the control plane signaling contains the user plane data
wherein when the message type identifier exists in the transmitted control plane signaling, it is indicated that the control plane signaling contains the user plane data; when the message type identifier does not exist in the transmitted control plane signaling, it is indicated that the control plane signaling does not contain the user plane data;
**characterized in that**, when the control plane signaling is a Mobile Originated, MO, signaling, a user equipment or a network node is configured to forward the control plane signaling containing the user plane data to a corresponding network node, the corresponding network node forwards the received control plane signaling to the MTC Server, and the MTC Server is further configured to, according to the message type identification in the control plane signaling, identify whether the control plane signaling contains the user plane data, when the control plane signaling contains the user plane data, retrieve the user plane data from the received control plane signaling;
when the control plane signaling is a Mobile Terminating, MT, signaling, the MTC server is configured to forward the control plane signaling containing the user plane data to other network nodes, other network nodes forwards control plane data to the user equipment, and the user equipment is configured to, according to the message type identification therein, identify whether the control plane signaling contains the user plane data, when the control plane signaling contains the user plane data, retrieves the user plane data from the control plane signaling.

## Patentansprüche

1. Verfahren zum Anzeigen eines Nachrichtentyps, umfassend:
Festlegen einer Nachrichtentyp-Identifikation in einer übertragenen Steuerungsebenen-Signalisierung (301), wobei die Nachrichtentyp-Identifikation ein Nachrichtentyp-Anzeigebit ist;
Identifizieren, durch einen Netzwerkknoten, der die Steuerungsebenen-Signalisierung empfängt, ob gemäß der Nachrichtentyp-Identifikation Benutzerebenendaten in der Steuerungsebenen-Signalisierung enthalten sind (302), und Übertragen der Benutzerebenendaten an eine Benutzerausrüstung oder andere Netzwerkknoten oder einen Maschinentypkommunikations-Server (MTC-Server) mittels der Steuerungsebenen-Signalisierung, wenn bestätigt wird, dass die Steuerungsebenen-Signalisierung die Benutzerebenendaten enthält (303);
Identifizieren, durch die Benutzerausrüstung oder den MTC-Server, ob die Steuerungsebenen-Signalisierung die Benutzerebenendaten enthält, und Abrufen der Benutzerebenendaten, wenn die Steuerungsebenen-Signalisierung die Benutzerebenendaten enthält;
**dadurch gekennzeichnet, dass** wenn der Nachrichtentyp-Identifikator in der übertragenen Steuerungsebenen-Signalisierung existiert, angezeigt wird, dass die Steuerungsebenen-Signalisierung die Benutzerebenendaten enthält;
wenn der Nachrichtentyp-Identifikator in der übertragenen Steuerungsebenen-Signalisierung nicht existiert, angezeigt wird, dass die Steuerungsebenen-Signalisierung die Benutzerebenendaten nicht enthält;
das Identifizieren, durch den MTC-Server, ob die Steuerungsebenen-Signalisierung die Benutzerebenendaten enthält, und Abrufen der Benutzerebenendaten, wenn die Steuerungsebenen-Signalisierung die Benutzerebenendaten enthält, besteht im:
wenn die Steuerungsebenen-Signalisierung eine Mobile Originated-, MO, Signalisierung ist, Weiterleiten, durch die Benutzerausrüstung oder den Netzwerkknoten, der die Benutzerebenendaten enthaltenden Steuerungsebenen-Signalisierung an einen entsprechenden Netzwerkknoten, Weiterleiten, durch den entsprechenden Netzwerkknoten, der empfangenen Steuerungsebenen-Signalisierung an den MTC-Server, und Identifizieren, durch den MTC-Server gemäß der Nachrichtentyp-Identifikation in der Steuerungsebenen-Signalisierung, ob die Steuerungsebenen-Signalisierung die Benutzerebenendaten enthält, Abrufen der Benutzerebenendaten aus der empfangenen Steuerungsebenen-Signalisierung, wenn die Steuerungsebenen-Signalisierung die Benutzerebenendaten enthält;
wenn die Steuerungsebenen-Signalisierung eine Mobile Terminating-, MT, Signalisierung ist, Weiterleiten, durch den MTC-Server oder den Netzwerkknoten, der die Benutzerebenendaten enthaltenden Steuerungsebenen-Signalisierung an andere Netzwerkknoten, Weiterleiten, durch andere Netzwerkknoten, von Steuerungsebenendaten an die Benutzerausrüstung, und Identifizieren, durch die Benutzerausrüstung gemäß der Nachrichtentyp-Identifikation in derselben, ob die Steuerungsebenen-Signalisierung die Benutzerebenendaten enthält, Abrufen der Benutzerebenendaten aus der Steuerungsebenen-Signalisierung, wenn die Steuerungsebenen-Signalisierung die Benutzerebenendaten enthält.

2. Verfahren nach Anspruch 1, weiter umfassend:
wenn bestätigt wird, dass die Steuerungsebenen-Signalisierung die Benutzerebenendaten nicht enthält, Weiterleiten, durch den Netzwerkknoten, der die Benutzerebenendaten nicht enthaltenden Steuerungsebenen-Signalisierung an eine entsprechende Benutzerausrüstung oder andere Netzwerkknoten oder den MTC-Server (304).

3. Verfahren nach Anspruch 1, wobei das Festlegen einer Nachrichtentyp-Identifikation in einer übertragenen Steuerungsebenen-Signalisierung darin besteht, dass:
die Benutzerausrüstung und/oder der Netzwerkknoten und/oder der MTC-Server eine Nachrichtentyp-Identifikation in einer übertragenen Steuerungsebenen-Signalisierung hinzufügt; wobei die Steuerungsebenen-Signalisierung eine die Benutzerebenendaten enthaltende Steuerungsebenen-Signalisierung oder eine herkömmliche Steuerungsebenen-Signalisierung ist.

4. Verfahren nach einem der Ansprüche 1 bis 3, wobei
die Benutzerausrüstung eine UE, eine mobile Ausrüstung (ME) oder eine Mobilstation (MS) ist;
der Netzwerkknoten ein erweiterter Knoten B (eNB), eine Mobilitätsmanagement-Entität (MME), ein versorgender GPRS-Unterstützungsknoten (SGSN), ein Paketdatennetzwerk-Gateway (P-GW), ein Gateway-GPRS-Unterstützungsknoten (GGSN), oder eine MTC Interworking-Funktion (MTC-IWF) ist.

5. Verfahren nach einem der Ansprüche 1 bis 3, wobei die Steuerungsebenen-Signalisierung eine Non Access Stratum-Signalisierung ist, die von der Benutzerausrüstung an die MME oder den SGSN gesendet wird, oder eine NAS-Signalisierung, die von der MME oder dem SGSN an die Benutzerausrüstung gesendet wird, oder die Steuerungsebenen-Signalisierung, die vom P-GW oder dem GGSN oder der MTC-IWF usw. an die MME oder den SGSN gesendet wird, oder die Steuerungsebenen-Signalisierung, die von der MTC-IWF an die MME oder den SGSN oder den MTC-Server gesendet wird, oder die Steuerungsebenen-Signalisierung, die vom P-GW oder dem GGSN an die MME oder den SGSN oder den MTC-Server gesendet wird, oder die Steuerungsebenen-Signalisierung, die vom MTC-Server an die MTC-IWF oder das P-GW oder den GGSN gesendet wird.

6. Verfahren nach Anspruch 1, wobei das Übertragen der Benutzerebenendaten an die Benutzerausrüstung oder andere Netzwerkknoten oder den MTC-Server mittels der Steuerungsebenen-Signalisierung besteht im:
Abrufen, durch den Netzwerkknoten, der Benutzerebenendaten aus der die Benutzerebenendaten enthaltenden Steuerungsebenen-Signalisierung, und Einkapseln der Benutzerebenendaten und der Nachrichtentyp-Identifikation in der Steuerungsebenen-Signalisierung, und Übertragen der Steuerungsebenen-Signalisierung an die Benutzerausrüstung oder andere Netzwerkknoten oder den MTC-Server.

7. System zum Anzeigen eines Nachrichtentyps, umfassend:
eine Benutzerausrüstung (61) und/oder einen Netzwerkknoten (62) und/oder einen Maschinentypkommunikations-, MTC, Server (63), dazu konfiguriert ist, eine Nachrichtentyp-Identifikation in einer übertragenen Steuerungsebenen-Signalisierung festzulegen, wobei die Nachrichtentyp-Identifikation ein Nachrichtentyp-Anzeigebit ist;
wobei der Netzwerkknoten weiter dazu konfiguriert ist, zu identifizieren, ob gemäß der Nachrichtentyp-Identifikation Benutzerebenendaten in der Steuerungsebenen-Signalisierung enthalten sind und die Benutzerebenendaten an die Benutzerausrüstung oder andere Netzwerkknoten oder den MTC-Server mittels der Steuerungsebenen-Signalisierung zu übertragen, wenn bestätigt wird, dass die Steuerungsebenen-Signalisierung die Benutzerebenendaten enthält; und
die Benutzerausrüstung oder der MTC-Server weiter dazu konfiguriert ist, zu identifizieren, ob die Steuerungsebenen-Signalisierung die Benutzerebenendaten enthält, und die Benutzerebenendaten abzurufen, wenn die Steuerungsebenen-Signalisierung die Benutzerebenendaten enthält;
wobei wenn der Nachrichtentyp-Identifikator in der übertragenen Steuerungsebenen-Signalisierung existiert, angezeigt wird, dass die Steuerungsebenen-Signalisierung die Benutzerebenendaten enthält; wenn der Nachrichtentyp-Identifikator in der übertragenen Steuerungsebenen-Signalisierung nicht existiert, angezeigt wird, dass die Steuerungsebenen-Signalisierung die Benutzerebenendaten nicht enthält;
**dadurch gekennzeichnet, dass** die Benutzerausrüstung oder der MTC-Server weiter dazu konfiguriert ist, zu identifizieren, ob die Steuerungsebenen-Signalisierung die Benutzerebenendaten enthält, und die Benutzerebenendaten in folgender Weise abzurufen, wenn die Steuerungsebenen-Signalisierung die Benutzerebenendaten enthält:
wenn die Steuerungsebenen-Signalisierung eine Mobile Originated-, MO, Signalisierung ist, Weiterleiten, durch die Benutzerausrüstung oder den Netzwerkknoten, der die Benutzerebenendaten enthaltenden Steuerungsebenen-Signalisierung an einen entsprechenden Netzwerkknoten, Weiterleiten, durch den entsprechenden Netzwerkknoten, der empfangenen Steuerungsebenen-Signalisierung an den MTC-Server, und Identifizieren, durch den MTC-Server gemäß der Nachrichtentyp-Identifikation in der Steuerungsebenen-Signalisierung, ob die Steuerungsebenen-Signalisierung die Benutzerebenendaten enthält, Abrufen der Benutzerebenendaten aus der empfangenen Steuerungsebenen-Signalisierung, wenn die Steuerungsebenen-Signalisierung die Benutzerebenendaten enthält;
wenn die Steuerungsebenen-Signalisierung eine Mobile Terminating-, MT, Signalisierung ist, Weiterleiten, durch den MTC-Server oder den Netzwerkknoten, der die Benutzerebenendaten enthaltenden Steuerungsebenen-Signalisierung an andere Netzwerkknoten, Weiterleiten, durch andere Netzwerkknoten, von Steuerungsebenendaten an die Benutzerausrüstung, und Identifizieren, durch die Benutzerausrüstung gemäß der Nachrichtentyp-Identifikation in derselben, ob die Steuerungsebenen-Signalisierung die Benutzerebenendaten enthält, Abrufen der Benutzerebenendaten aus der Steuerungsebenen-Signalisierung, wenn die Steuerungsebenen-Signalisierung die Benutzerebenendaten enthält,
wobei vorzugsweise der Netzwerkknoten weiter dazu konfiguriert ist, die die Benutzerebenendaten nicht enthaltende Steuerungsebenen-Signalisierung an eine entsprechende Benutzerausrüstung oder andere Netzwerkknoten oder den MTC-Server weiterzuleiten, wenn bestätigt wird, dass die Steuerungsebenen-Signalisierung die Benutzerebenendaten nicht enthält.

8. Benutzerausrüstung, die dazu konfiguriert ist, eine Nachrichtentyp-Identifikation in einer übertragenen Steuerungsebenen-Signalisierung festzulegen, wobei die Nachrichtentyp-Identifikation ein Nachrichtentyp-Anzeigebit ist, und die von einem Netzwerkknoten übertragene Steuerungsebenen-Signalisierung zu empfangen, zu identifizieren, ob die Steuerungsebenen-Signalisierung Benutzerebenendaten enthält, und die Benutzerebenendaten abzurufen, wenn die Steuerungsebenen-Signalisierung die Benutzerebenendaten enthält; **dadurch gekennzeichnet, dass** wenn der Nachrichtentyp-Identifikator in der übertragenen Steuerungsebenen-Signalisierung existiert, angezeigt wird, dass die Steuerungsebenen-Signalisierung die Benutzerebenendaten enthält; wenn der Nachrichtentyp-Identifikator in der übertragenen Steuerungsebenen-Signalisierung nicht existiert, angezeigt wird, dass die Steuerungsebenen-Signalisierung die Benutzerebenendaten nicht enthält;
wenn die Steuerungsebenen-Signalisierung eine Mobile Originated-, MO, Signalisierung ist, die Benutzerausrüstung weiter dazu konfiguriert ist, die die Benutzerebenendaten enthaltende Steuerungsebenen-Signalisierung an einen entsprechenden Netzwerkknoten weiterzuleiten, der entsprechende Netzwerkknoten dazu konfiguriert ist, die empfangene Steuerungsebenen-Signalisierung an einen MTC-Server weiterzuleiten, und der MTC-Server dazu konfiguriert ist, gemäß der Nachrichtentyp-Identifikation in der Steuerungsebenen-Signalisierung zu identifizieren, ob die Steuerungsebenen-Signalisierung die Benutzerebenendaten enthält, wenn die Steuerungsebenen-Signalisierung die Benutzerebenendaten enthält, die Benutzerebenendaten aus der empfangenen Steuerungsebenen-Signalisierung abzurufen;
wenn die Steuerungsebenen-Signalisierung eine Mobile Terminating-, MT, Signalisierung ist, der MTC-Server oder der Netzwerkknoten dazu konfiguriert ist, die die Benutzerebenendaten enthaltende Steuerungsebenen-Signalisierung an andere Netzwerkknoten weiterzuleiten, andere Netzwerkknoten Steuerungsebenendaten an die Benutzerausrüstung weiterleiten, und die Benutzerausrüstung weiter dazu konfiguriert ist, gemäß der Nachrichtentyp-Identifikation in derselben zu identifizieren, ob die Steuerungsebenen-Signalisierung die Benutzerebenendaten enthält, wenn die Steuerungsebenen-Signalisierung die Benutzerebenendaten enthält, die Benutzerebenendaten aus der Steuerebenen-Signalisierung abzurufen.

9. Netzwerkknoten, der dazu konfiguriert ist, eine Nachrichtentyp-Identifikation in einer übertragenen Steuerungsebenen-Signalisierung festzulegen, wobei die Nachrichtentyp-Identifikation ein Nachrichtentyp-Anzeigebit ist, zu identifizieren, ob gemäß der Nachrichtentyp-Identifikation Benutzerebenendaten in der Steuerungsebenen-Signalisierung enthalten sind, und die Benutzerebenendaten mittels der Steuerungsebenen-Signalisierung an die Benutzerausrüstung oder andere Netzwerkknoten oder den MTC-Server zu übertragen, wenn bestätigt wird, dass die Steuerungsebenen-Signalisierung die Benutzerebenendaten enthält; wobei wenn der Nachrichtentyp-Identifikator in der übertragenen Steuerungsebenen-Signalisierung existiert, angezeigt wird, dass die Steuerungsebenen-Signalisierung die Benutzerebenendaten enthält; wenn der Nachrichtentyp-Identifikator in der übertragenen Steuerungsebenen-Signalisierung nicht existiert, angezeigt wird, dass die Steuerungsebenen-Signalisierung die Benutzerebenendaten nicht enthält;
**dadurch gekennzeichnet, dass** wenn die Steuerungsebenen-Signalisierung eine Mobile Originated-, MO, Signalisierung ist, der Netzwerkknoten weiter dazu konfiguriert ist, die die Benutzerebenendaten enthaltende Steuerungsebenen-Signalisierung an einen entsprechenden Netzwerkknoten weiterzuleiten, der entsprechende Netzwerkknoten die empfangene Steuerungsebenen-Signalisierung an den MTC-Server weiterleitet, und der MTC-Server dazu konfiguriert ist, gemäß der Nachrichtentyp-Identifikation in der Steuerungsebenen-Signalisierung zu identifizieren, ob die Steuerungsebenen-Signalisierung die Benutzerebenendaten enthält, wenn die Steuerungsebenen-Signalisierung die Benutzerebenendaten enthält, die Benutzerebenendaten aus der empfangenen Steuerungsebenen-Signalisierung abzurufen;
wenn die Steuerungsebenen-Signalisierung eine Mobile Terminating-, MT, Signalisierung ist, der Netzwerkknoten weiter dazu konfiguriert ist, die die Benutzerebenendaten enthaltende Steuerungsebenen-Signalisierung an andere Netzwerkknoten weiterzuleiten, andere Netzwerkknoten Steuerungsebenendaten an die Benutzerausrüstung weiterleiten, und die Benutzerausrüstung dazu konfiguriert ist, gemäß der Nachrichtentyp-Identifikation in derselben zu identifizieren, ob die Steuerungsebenen-Signalisierung die Benutzerebenendaten enthält, wenn die Steuerungsebenen-Signalisierung die Benutzerebenendaten enthält, die Benutzerebenendaten aus der Steuerebenen-Signalisierung abzurufen.

10. Netzwerkknoten nach Anspruch 9, der weiter dazu konfiguriert ist, die die Benutzerebenendaten nicht enthaltende Steuerungsebenen-Signalisierung an eine entsprechende Benutzerausrüstung oder andere Netzwerkknoten oder einen MTC-Server weiterzuleiten, wenn bestätigt wird, dass die Steuerungsebenen-Signalisierung die Benutzerebenendaten nicht enthält.

11. Maschinentypkommunikations-Server (MTC-Server), der dazu konfiguriert ist, eine Nachrichtentyp-Identifikation in einer übertragenen Steuerungsebenen-Signalisierung festzulegen, wobei die Nachrichtentyp-Identifikation ein Nachrichtentyp-Anzeigebit ist, die von einem Netzwerkknoten übertragene Steuerungsebenen-Signalisierung zu empfangen, zu identifizieren, ob die Steuerungsebenen-Signalisierung Benutzerebenendaten enthält, und die Benutzerebenendaten aus derselben abzurufen, wenn die Steuerungsebenen-Signalisierung die Benutzerebenendaten enthält,
wobei wenn der Nachrichtentyp-Identifikator in der übertragenen Steuerungsebenen-Signalisierung existiert, angezeigt wird, dass die Steuerungsebenen-Signalisierung die Benutzerebenendaten enthält; wenn der Nachrichtentyp-Identifikator in der übertragenen Steuerungsebenen-Signalisierung nicht existiert, angezeigt wird, dass die Steuerungsebenen-Signalisierung die Benutzerebenendaten nicht enthält;
**dadurch gekennzeichnet, dass** wenn die Steuerungsebenen-Signalisierung eine Mobile Originated-, MO, Signalisierung ist, eine Benutzerausrüstung oder ein Netzwerkknoten dazu konfiguriert ist, die die Benutzerebenendaten enthaltende Steuerungsebenen-Signalisierung an einen entsprechenden Netzwerkknoten weiterzuleiten, der entsprechende Netzwerkknoten die empfangene Steuerungsebenen-Signalisierung an den MTC-Server weiterleitet, und der MTC-Server weiter dazu konfiguriert ist, gemäß der Nachrichtentyp-Identifikation in der Steuerungsebenen-Signalisierung zu identifizieren, ob die Steuerungsebenen-Signalisierung die Benutzerebenendaten enthält, wenn die Steuerungsebenen-Signalisierung die Benutzerebenendaten enthält, die Benutzerebenendaten aus der empfangenen Steuerungsebenen-Signalisierung abzurufen;
wenn die Steuerungsebenen-Signalisierung eine Mobile Terminating-, MT, Signalisierung ist, der MTC-Server dazu konfiguriert ist, die die Benutzerebenendaten enthaltende Steuerungsebenen-Signalisierung an andere Netzwerkknoten weiterzuleiten, andere Netzwerkknoten Steuerungsebenendaten an die Benutzerausrüstung weiterleitet, und die Benutzerausrüstung dazu konfiguriert ist, gemäß der Nachrichtentyp-Identifikation in derselben zu identifizieren, ob die Steuerungsebenen-Signalisierung die Benutzerebenendaten enthält, wenn die Steuerungsebenen-Signalisierung die Benutzerebenendaten enthält, die Benutzerebenendaten aus der Steuerebenen-Signalisierung abruft.

## Revendications

1. Procédé pour indiquer un type de message, comprenant :
le réglage d'une identification de type de message dans une signalisation de plan de commande transmise (301), dans lequel l'identification de type de message est un bit d'indication de type de message ;
le fait d'identifier, par un noeud de réseau qui reçoit la signalisation de plan de commande, si des données de plan d'utilisateur sont contenues dans la signalisation de plan de commande en fonction de l'identification de type de message (302), et la transmission des données de plan d'utilisateur à un équipement utilisateur ou d'autres noeuds de réseau ou un serveur de communication de type machine (serveur MTC) par le biais de la signalisation de plan de commande quand il est confirmé que la signalisation de plan de commande contient les données de plan d'utilisateur (303) ;
le fait d'identifier, par l'équipement utilisateur ou le serveur MTC, si la signalisation de plan de commande contient les données de plan d'utilisateur, et la récupération des données de plan d'utilisateur quand la signalisation de plan de commande contient les données de plan d'utilisateur ;
**caractérisé en ce que**, quand l'identificateur de type de message existe dans la signalisation de plan de commande transmise, il est indiqué que la signalisation de plan de commande contient les données de plan d'utilisateur ; quand l'identificateur de type de message n'existe pas dans la signalisation de plan de commande transmise, il est indiqué que la signalisation de plan de commande ne contient pas les données de plan d'utilisateur ;
le fait d'identifier, par le serveur MTC, si la signalisation de plan de commande contient les données de plan d'utilisateur, et la récupération des données de plan d'utilisateur quand la signalisation de plan de commande contient les données de plan d'utilisateur est :
quand la signalisation de plan de commande est une signalisation provenant d'un mobile, MO, la retransmission par l'équipement utilisateur ou le noeud de réseau de la signalisation de plan de commande contenant les données de plan d'utilisateur à un noeud de réseau correspondant, la retransmission par le noeud de réseau correspondant de la signalisation de plan de commande reçue au serveur MTC, et le fait d'identifier par le serveur MTC, en fonction de l'identification de type de message dans la signalisation de plan de commande, si la signalisation de plan de commande contient les données de plan d'utilisateur, quand la signalisation de plan de commande contient les données de plan d'utilisateur, la récupération des données de plan d'utilisateur à partir de la signalisation de plan de commande reçue ;
quand la signalisation de plan de commande est une signalisation terminant à un mobile, MT, la retransmission par le serveur MTC ou le noeud de réseau de la signalisation de plan de commande contenant les données de plan d'utilisateur à d'autres noeuds de réseau, la retransmission par d'autres noeuds de réseau de données de plan de commande à l'équipement utilisateur, et le fait d'identifier par l'équipement utilisateur, en fonction de l'identification de type de message dans celles-ci, si la signalisation de plan de commande contient les données de plan d'utilisateur, quand la signalisation de plan de commande contient les données de plan d'utilisateur, la récupération des données de plan d'utilisateur à partir de la signalisation de plan de commande.

2. Procédé selon la revendication 1, comprenant en outre :
quand il est confirmé que la signalisation de plan de commande ne contient pas les données de plan d'utilisateur, la retransmission par le noeud de réseau de la signalisation de plan de commande ne contenant pas les données de plan d'utilisateur à un équipement utilisateur correspondant, ou d'autres noeuds de réseau ou le serveur MTC (304).

3. Procédé selon la revendication 1, dans lequel le réglage d'une identification de type de message dans une signalisation de plan de commande transmise est que :
l'équipement utilisateur et/ou le noeud de réseau et/ou le serveur MTC ajoute une identification de type de message dans une signalisation de plan de commande transmise ; dans lequel la signalisation de plan de commande est une signalisation de plan de commande contenant les données de plan d'utilisateur ou une signalisation de plan de commande conventionnelle.

4. Procédé selon l'une quelconque des revendications 1 à 3, dans lequel,
l'équipement utilisateur est un UE, un équipement mobile (ME) ou une station mobile (MS) ;
le noeud de réseau est un noeud B évolué (eNB), une entité de gestion de mobilité (MME), un noeud de support GPRS de desserte (SGSN), une passerelle de réseau de données par paquets (P-GW), un noeud de support GPRS de passerelle (GGSN) ou une fonction d'interfonctionnement de MTC (MTC-IWF).

5. Procédé selon l'une quelconque des revendications 1 à 3, dans lequel, la signalisation de plan de commande est une signalisation de couche de non-accès transmise à la MME ou au SGSN par l'équipement utilisateur, ou une signalisation de NAS transmise à l'équipement utilisateur par la MME ou le SGSN, ou la signalisation de plan de commande transmise à la MME ou au SGSN par la P-GW ou le GGSN ou la MTC-IWF, etc., ou la signalisation de plan de commande transmise à la MME ou au SGSN ou le serveur MTC par la MTC-IWF, ou la signalisation de plan de commande transmise à la MME ou au SGSN ou le serveur MTC par la P-GW ou le GGSN, ou la signalisation de plan de commande transmise à la MTC-IWF ou à la P-GW ou au GGSN par le serveur MTC.

6. Procédé selon la revendication 1, dans lequel la transmission des données de plan d'utilisateur à l'équipement utilisateur ou d'autres noeuds de réseau ou au serveur MTC par le biais de la signalisation de plan de commande est :
la récupération par le noeud de réseau des données de plan d'utilisateur à partir de la signalisation de plan de commande contenant les données de plan d'utilisateur, et l'encapsulation des données de plan d'utilisateur et de l'identification de type de message dans la signalisation de plan de commande et la transmission de la signalisation de plan de commande à l'équipement utilisateur ou d'autres noeuds de réseau, ou au serveur MTC.

7. Système pour indiquer un type de message, comprenant :
un équipement utilisateur (61) et/ou un noeud de réseau (62) et/ou un serveur de communication de type machine, MTC, (63), est configuré pour régler une identification de type de message dans une signalisation de plan de commande transmise, dans lequel l'identification de type de message est un bit d'indication de type de message ;
le noeud de réseau est configuré en outre pour identifier si des données de plan d'utilisateur sont contenues dans la signalisation de plan de commande en fonction de l'identification de type de message, et la transmission des données de plan d'utilisateur à l'équipement utilisateur ou d'autres noeuds de réseau ou au serveur MTC par le biais de la signalisation de plan de commande quand il est confirmé que la signalisation de plan de commande contient les données de plan d'utilisateur ; et
l'équipement utilisateur ou le serveur MTC est configuré en outre pour identifier si la signalisation de plan de commande contient les données de plan d'utilisateur, et la récupération des données de plan d'utilisateur quand la signalisation de plan de commande contient les données de plan d'utilisateur ;
dans lequel, quand l'identificateur de type de message existe dans la signalisation de plan de commande transmise, il est indiqué que la signalisation de plan de commande contient les données de plan d'utilisateur ; quand l'identificateur de type de message n'existe pas dans la signalisation de plan de commande transmise, il est indiqué que la signalisation de plan de commande ne contient pas les données de plan d'utilisateur ;
**caractérisé en ce que** l'équipement utilisateur ou le serveur MTC est configuré en outre pour identifier si la signalisation de plan de commande contient les données de plan d'utilisateur, et récupérer les données de plan d'utilisateur quand la signalisation de plan de commande contient les données de plan d'utilisateur de la manière suivante :
quand la signalisation de plan de commande est une signalisation provenant d'un mobile, MO, la retransmission par l'équipement utilisateur ou le noeud de réseau de la signalisation de plan de commande contenant les données de plan d'utilisateur à un noeud de réseau correspondant, la retransmission par le noeud de réseau correspondant de la signalisation de plan de commande reçue au serveur MTC, et le fait d'identifier par le serveur MTC, en fonction de l'identification de type de message dans la signalisation de plan de commande, si la signalisation de plan de commande contient les données de plan d'utilisateur, quand la signalisation de plan de commande contient les données de plan d'utilisateur, la récupération des données de plan d'utilisateur à partir de la signalisation de plan de commande reçue ;
quand la signalisation de plan de commande est une signalisation terminant à un mobile, MT, la retransmission par le serveur MTC ou le noeud de réseau de la signalisation de plan de commande contenant les données de plan d'utilisateur à d'autres noeuds de réseau, la retransmission par d'autres noeuds de données de plan de commande à l'équipement utilisateur, et le fait d'identifier par l'équipement utilisateur, en fonction de l'identification de type de message dans celles-ci, si la signalisation de plan de commande contient les données de plan d'utilisateur, quand la signalisation de plan de commande contient les données de plan d'utilisateur, la récupération des données de plan d'utilisateur à partir de la signalisation de plan de commande,
dans lequel, de préférence, le noeud de réseau est configuré en outre pour retransmettre la signalisation de plan de commande ne contenant pas les données de plan d'utilisateur à un équipement utilisateur correspondant ou d'autres noeuds de réseau ou au serveur MTC quand il est confirmé que la signalisation de plan de commande ne contient pas les données de plan d'utilisateur.

8. Equipement utilisateur, configuré pour régler une identification de type de message dans une signalisation de plan de commande transmise, dans lequel l'identification de type de message est un bit d'indication de type de message, et recevoir la signalisation de plan de commande transmise par un noeud de réseau, identifier si la signalisation de plan de commande contient les données de plan d'utilisateur, et récupérer les données de plan d'utilisateur quand la signalisation de plan de commande contient les données de plan d'utilisateur ; **caractérisé en ce que**, quand l'identificateur de type de message existe dans la signalisation de plan de commande transmise, il est indiqué que la signalisation de plan de commande contient les données de plan d'utilisateur ; quand l'identificateur de type de message n'existe pas dans la signalisation de plan de commande transmise, il est indiqué que la signalisation de plan de commande ne contient pas les données de plan d'utilisateur ;
quand la signalisation de plan de commande est une signalisation provenant d'un mobile, MO, l'équipement utilisateur est configuré en outre pour retransmettre la signalisation de plan de commande contenant les données de plan d'utilisateur à un noeud de réseau correspondant, le noeud de réseau correspondant est configuré pour retransmettre la signalisation de plan de commande reçue à un serveur MTC, et le serveur MTC est configuré pour, en fonction de l'identification de type de message dans la signalisation de plan de commande, identifier si la signalisation de plan de commande contient les données de plan d'utilisateur, quand la signalisation de plan de commande contient les données de plan d'utilisateur, récupérer les données de plan d'utilisateur à partir de la signalisation de plan de commande reçue ;
quand la signalisation de plan de commande est une signalisation terminant à un mobile, MT, le serveur MTC ou le noeud de réseau est configuré pour retransmettre la signalisation de plan de commande contenant les données de plan d'utilisateur à d'autres noeuds de réseau, d'autres noeuds de réseau retransmettent des données de plan de commande à l'équipement utilisateur, et l'équipement utilisateur est configuré en outre pour, en fonction de l'identification de type de message dans celles-ci, identifier si la signalisation de plan de commande contient les données de plan d'utilisateur, quand la signalisation de plan de commande contient les données de plan d'utilisateur, récupérer les données de plan d'utilisateur à partir de la signalisation de plan de commande.

9. Noeud de réseau, configuré pour régler une identification de type de message dans une signalisation de plan de commande transmise, dans lequel l'identification de type de message est un bit d'indication de type de message, identifier si des données de plan d'utilisateur sont contenues dans la signalisation de plan de commande en fonction de l'identification de type de message, et transmettre les données de plan d'utilisateur à l'équipement utilisateur ou d'autres noeuds de réseau ou au serveur MTC par le biais de la signalisation de plan de commande quand il est confirmé que la signalisation de plan de commande contient les données de plan d'utilisateur ; dans lequel, quand l'identificateur de type de message existe dans la signalisation de plan de commande transmise, il est indiqué que la signalisation de plan de commande contient les données de plan d'utilisateur ; quand l'identificateur de type de message n'existe pas dans la signalisation de plan de commande transmise, il est indiqué que la signalisation de plan de commande ne contient pas les données de plan d'utilisateur ;
**caractérisé en ce que**, quand la signalisation de plan de commande est une signalisation provenant d'un mobile, MO, le noeud de réseau est configuré en outre pour retransmettre la signalisation de plan de commande contenant les données de plan d'utilisateur à un noeud de réseau correspondant, le noeud de réseau correspondant retransmet la signalisation de plan de commande reçue au serveur MTC, et le serveur MTC est configuré pour, en fonction de l'identification de type de message dans la signalisation de plan de commande, identifier si la signalisation de plan de commande contient les données de plan d'utilisateur, quand la signalisation de plan de commande contient les données de plan d'utilisateur, récupérer les données de plan d'utilisateur à partir de la signalisation de plan de commande reçue ;
quand la signalisation de plan de commande est une signalisation terminant à un mobile, MT, le noeud de réseau est configuré en outre pour retransmettre la signalisation de plan de commande contenant les données de plan d'utilisateur à d'autres noeuds de réseau, d'autres noeuds de données retransmettent des données de plan de commande à l'équipement utilisateur, et l'équipement utilisateur est configuré pour, en fonction de l'identification de type de message dans celles-ci, identifier si la signalisation de plan de commande contient les données de plan d'utilisateur, quand la signalisation de plan de commande contient les données de plan d'utilisateur, récupérer les données de plan d'utilisateur à partir de la signalisation de plan de commande.

10. Noeud de réseau selon la revendication 9, configuré en outre pour retransmettre la signalisation de plan de commande ne contenant pas les données de plan d'utilisateur à un équipement utilisateur correspondant ou d'autres noeuds de réseau ou un serveur MTC quand il est confirmé que la signalisation de plan de commande ne contient pas les données de plan d'utilisateur.

11. Serveur de communication de type machine (serveur MTC), configuré pour régler une identification de type de message dans une signalisation de plan de commande transmise, dans lequel l'identification de type de message est un bit d'indication de type de message, recevoir la signalisation de plan de commande transmise par un noeud de réseau, identifier si la signalisation de plan de commande contient les données de plan d'utilisateur, et récupérer les données de plan d'utilisateur quand la signalisation de plan de commande contient les données de plan d'utilisateur,
dans lequel, quand l'identificateur de type de message existe dans la signalisation de plan de commande transmise, il est indiqué que la signalisation de plan de commande contient les données de plan d'utilisateur ; quand l'identificateur de type de message n'existe pas dans la signalisation de plan de commande transmise, il est indiqué que la signalisation de plan de commande ne contient pas les données de plan d'utilisateur ;
**caractérisé en ce que**, quand la signalisation de plan de commande est une signalisation provenant d'un mobile, MO, un équipement utilisateur ou un noeud de réseau est configuré pour retransmettre la signalisation de plan de commande contenant les données de plan d'utilisateur à un noeud de réseau correspondant, le noeud de réseau correspondant retransmet la signalisation de plan de commande reçue au serveur MTC, et le serveur MTC est configuré pour, en fonction de l'identification de type de message dans la signalisation de plan de commande, identifier si la signalisation de plan de commande contient les données de plan d'utilisateur, quand la signalisation de plan de commande contient les données de plan d'utilisateur, récupérer les données de plan d'utilisateur à partir de la signalisation de plan de commande reçue ;
quand la signalisation de plan de commande est une signalisation terminant à un mobile, MT, le serveur MTC est configuré pour retransmettre la signalisation de plan de commande contenant les données de plan d'utilisateur à d'autres noeuds de réseau, d'autres noeuds de réseau retransmettent des données de plan de commande à l'équipement utilisateur, et l'équipement utilisateur est configuré pour, en fonction de l'identification de type de message dans celles-ci, identifier si la signalisation de plan de commande contient les données de plan d'utilisateur, quand la signalisation de plan de commande contient les données de plan d'utilisateur, récupérer les données de plan d'utilisateur à partir de la signalisation de plan de commande.
